# EUROPÄISCHE PATENTSCHRIFT

(11) **EP 1 493 271 B1**
(45) Veröffentlichungstag und Bekanntmachung des Hinweises auf die Patenterteilung: **19.08.2009**
(21) Anmeldenummer: 03720259.5
(22) Anmeldetag: 28.03.2003
(51) Int. Cl.: H04N 5/232

(54) **SYNCHRONISATIONSGERÄT**
SYNCHRONIZATION DEVICE
DISPOSITIF DE SYNCHRONISATION

(30) Priorität: 05.04.2002 DE 10216218
(43) Veröffentlichungstag der Anmeldung: 05.01.2005
(73) Patentinhaber: ARNOLD & RICHTER CINE TECHNIK GMBH & CO. BETRIEBS KG, 80799 München (DE)
(72) Erfinder: HAUBMANN, Michael, A-1120 Wien (AT)
(74) Vertreter: Ninnemann, Detlef
(86) Internationale Anmeldenummer: PCT/DE2003/001115
(87) Internationale Veröffentlichungsnummer: WO 2003/085961

(56) Entgegenhaltungen:
- GB-A- 2 129 590
- US-A- 5 638 151

## Beschreibung

Die Erfindung betrifft ein Synchronisationsgerät gemäß dem Oberbegriff des Anspruchs 1.

Ein derartiges Synchronisationsgerät dient dazu, ein optisches Synchronisationssignal für computergesteuerte Bildaufnahmen einer Laufbildkamera bereitzustellen. Dazu weist das Synchronisationsgerät eine Signalvorrichtung zur Erzeugung eines optischen Synchronisationssignals auf, wobei das optische Synchronisationssignal mittels des die Bildaufnahme steuernden Computers auslösbar ist.

Bei Filmproduktionen werden häufig rechnergesteuerte Kamerafahrten (motion control) durchgeführt. Um eine einfachere Synchronisation der einzelnen Durchläufe (takes) solcher computergesteuerten Kamerafahrten zu erzielen, wird ein als "bloop-light" bezeichnetes Synchronisationsgerät verwendet. Dieses Synchronisationsgerät umfasst eine Lichtquelle, die vom Computer, der die Kamerabewegung steuert, an einem definierten Zeitpunkt nach Beginn des Durchlaufes ausgelöst wird. Die Lichtquelle des Synchronisationsgerätes ist im Auslösezeitpunkt im Aufnahmebild der Laufbildkamera positioniert. Anhand des computergesteuerten Aufleuchtens der Lichtquelle lässt sich der Synchronzeitpunkt der einzelnen Durchläufe in der Nachbearbeitung leicht bestimmen.

Derartige Synchronisationsgeräte erfüllen daher die Funktion einer Art elektronischer Klappe, wie sie zur Synchronisation von Ton- und Bildaufnahmen einer Laufbildkamera verwendet werden. Im Unterschied zur elektronischen Klappe lassen sich durch ein gattungsgemäßes Synchronisationsgerät eine Mehrzahl computergesteuerter Bildaufnahmen synchronisieren.

Aus dem Stand der Technik sind Synchronisationsgeräte bekannt, die üblicherweise eine einzelne Lichtquelle zur Erzeugung des optischen Synchronisationssignals enthalten. Daraus folgt der Nachteil, dass mit derartigen Synchronisationsgeräten nur die Erzeugung eines einzigen optischen Synchronisationssignals möglich ist.

Aus der GB-A-2 129 590 ist ein Synchronisationsgerät zur gleichzeitigen Abgabe von optischen und akustischen Signalen bekannt, mit dem getrennt voneinander aber gleichzeitig erzeugte Bild- und Tonsignale für Film- und Videoaufnahmen mit getrennter Tonaufzeichnung synchronisiert werden. Das bekannte Synchronisationsgerät weist eine Tastatur und einen Speicher zur Eingabe und Speicherung einer ausgewählten Folge alphanumerischer Zeichen, eine insbesondere als Flüssigkristallanzeige ausgebildete Einrichtung zur optischen Anzeige der Zeichenfolge, einen Sprachsynthesizer zur akustischen Wiedergabe der Zeichenfolge und eine Einrichtung zur gleichzeitigen Abgabe visueller und akustischer Startsignale zur Synchronisation auf. Als visuelles Startsignal wird insbesondere eine elektromechanisch bewegte Fahne oder eine oder mehrere Lichtquellen und als akustisches Startsignal ein beliebiges Tonsignal eingesetzt.

Bei dem bekannten Synchronisationsgerät besteht die insbesondere als Flüssigkristallanzeige ausgebildete optische Anzeigeeinrichtung aus einer mehrstelligen Sieben-Segment-Anzeige für alphanumerische Zeichen, die über die Tastatur eingebbar sind. Die Eingabe der alphanumerischen Zeichen über die Tastatur sowie die gleichzeltige Abgabe inhaltlich übereinstimmender oder zumindest miteinander korrespondierender visueller und akustischer Signale setzen voraus, dass sich die optische Anzeige aus alphabetischen oder numerischen Zeichen in Form aussprechbarer Buchstaben, Worte und/ oder Zahlen zusammensetzt, da ansonsten keine entsprechende Übereinstimmung zwischen der optischen Anzeige und dem akustischen Signal bestehen würde. Diese Einschränkung auf aussprechbare Buchstaben, Worte und/oder Zahlen bedingt jedoch eine hinreichende Erkennbarkeit der optischen Anzeige, so dass das bekannte Synchronisationsgerät im Bereich der Schärfenebene der Film- oder Videoaufnahmebilder angeordnet werden muss, da bei einer Anordnung des Synchronisationsgerätes außerhalb der Schärfenebene die Erkennbarkeit der Buchstaben und/ oder Ziffern beeinträchtigt und damit die Nachbearbeitung der Film- oder Videoaufnahmen erschwert oder unmöglich gemacht wäre.

Um die Ziffern und/ oder Buchstaben auch außerhalb der Schärfenebene erkennbar zu halten, müsste alternativ eine sehr große Sieben-Segment-Anzeigeeinrichtung vorgesehen werden, die jedoch ein großes, unhandliches Synchronisationsgerät zur Folge hätte. Zudem ist der Informationsgehalt des bekannten Synchronisationsgerätes auf das mehrstellige Sieben-Segment-Display mit den damit darstellbaren Buchstaben und/ oder Ziffern beschränkt.

Aus der US-A-5 638 151 ist eine eigenständige, hintergrundbeleuchtete Klappe mit einer Flüssigkristall (LCD)- oder LED-Anzeige für eine Anzeige der Uhrzeit in Stunden, Minuten, Sekunden sowie Filmbildern bzw. eines Timecodes bekannt. Die mit einer manuellen Klappvorrichtung ausgestattete Klappe weist mehrere durch horizontale und vertikale Linien voneinander getrennte Bereiche auf, in die aufnahmespezifische Informationen wie Produktionsbezeichnungen, Filmrollennummern, Szenennummern, Aufnahmesequenz-Nummern, Regisseur, Kameramann, Datum und der gleichen handschriftlich eingetragen werden können. Wegen der begrenzten Größe der Klappe ist die LCD- oder LED-Anzeige in ihrer Größe und wegen der ausschließlichen Zeit- und Filmbildanzeige und damit einer ausschließlichen Ziffernanzeige auch in ihrem Informationsgehalt beschränkt.

Der vorliegenden Erfindung liegt die Aufgabenstellung zugrunde, ein Synchronisationsgerät zu schaffen, das eine Erkennung der von den optischen Signalelementen abgegebenen Informationen aus unterschiedlichen Entfernungen von der Laufbildkamera und damit auch außerhalb der an der Laufbildkamera eingestellten Schärfenebene gewährleistet, sowie bei geringer Baugröße die Darstellung einer größtmöglichen Anzahl von Informationen unterschiedlichster Art ermöglicht.

Diese Aufgabe wird durch ein Synchronisationsgerät zum Bereitstellen optischer Synchronisationssignale in computergesteuerten Bildaufnahmen einer Laufbildkamera mit einer Signalvorrichtung zur Erzeugung der optischen Synchronisationssignale, die mittels des die Bildaufnahmen steuernden Computers auslösbar sind, der über eine Steuerschnittstelle an das Synchronlsationsgerät anschließbar ist, und mit einer Ansteuerelektronik zur Ansteuerung mehrerer in Form einer Matrix angeordneter und zur ansteuerbaren, additiven Farbmischung des von ihnen abgegebenen Lichtes geeigneter lichtemittierender Dioden gelöst.

Die erfindungsgemäße Lösung ermöglicht mit den in einer Matrix angeordneten und zur Abgabe von Farbmarken geeigneten lichtemittierenden Dioden die Darstellung eines Synchronisationssignales an unterschiedlichen Orten und in unterschiedlichen Entfernungen von der Laufbildkamera, die auch außerhalb der eingestellten Schärfenebene der Laufbildkamera deutlich erkennbar sind. So kann das Synchronisationsgerät unmittelbar vor der Kameraoptik in einem Filterhalter angeordnet werden, was bei Verwendung bekannter Synchronisationsgeräte nur zu unscharfen und nicht mehr erkennbaren Informationen führen würde.

Insbesondere die Darstellung mehrerer Farben mittels der zur Farbdarstellung geeigneten lichtemittierenden Dioden macht das erfindungsgemäße Synchronisatlonsgerät für die Verwendung außerhalb der Schärfenebene der Laufbildkamera und zur guten Erkennbarkeit unterschiedlichster Farbsymbole geeignet.

Weiterhin wird durch die Darstellung mehrerer Farben der mögliche Informationsgehalt erweitert und eine Anpassung an unterschiedliche Filmarten, das heißt an Laufbildfilme mit unterschiedlicher Filmempfindlichkeit möglich.

Mittels einer Signalvorrichtung mit einer Mehrzahl optischer Signalelemente lassen sich entsprechend der durch die Anzahl der optischen Signalelemente vorgegebenen Kombinationsmöglichkeiten mindestens eine entsprechende Anzahl unterschiedlicher optischer Synchronisationssignale realisieren.

Mit beispielsweise nur zwei optischen Signalelementen lassen sich bereits drei unterschiedliche optische Synchronisationssignale darstellen (beide optische Signalelemente aktiv; nur das erste Signalelement aktiv; nur das zweite Signalelement aktiv). Eine größere Zahl optischer Signalelemente ermöglicht die Erzeugung einer entsprechend größeren Zahl optischer Synchronisationssignale.

Unter optischen Signalelementen sind hier sowohl Bauelemente zu verstehen, die zur Erzeugung eines optischen Signals selbst Licht emittieren als auch Bauelemente, die zwischen Zuständen hin- und herschaltbar sind, die bei einer Beleuchtung des Synchronisationsgerätes mit Licht als unterschiedliche optische Signale wahrgenommen werden.

Die Signalvorrichtung des Synchronisationsgerätes weist optische Signalelemente auf, die in Form einer Digitalanzeige für Buchstaben und/oder Ziffern angeordnet sind. Einzelne optische Signalelemente stellen dabei Einzelsegmente der darzustellenden Buchstaben und/oder Ziffern dar. Auf diese Weise lassen sich eine Vielzahl unterschiedlicher optischer Synchronisationssignale in Form von Buchstaben und/oder Ziffern oder deren Kombinationen erzeugen.

Die optischen Signalelemente der Signalvorrichtung sind in Form einer Matrix angeordnet. Die Zahl der darstellbaren optischen Synchronisationssignale ist dabei ausschließlich durch die Auflösung der Matrix, d.h. die Zahl der in Zeilen und Spalten angeordneten optischen Signalelemente, begrenzt. So lassen sich in einer Matrix neben den üblichen Buchstaben und/oder Zahlen und deren Kombinationen auch Symbole und Muster als optische Synchronisationssignale generieren.

Die Anordnung der optischen Signalelemente in einer Matrix ermöglicht somit eine im Vergleich zur Anordnung als Digitalanzeige noch flexiblere Generierung einer noch größeren Anzahl optischer Synchronisationssignale.

Das Synchronisationsgerät weist optische Signalelemente auf, die als lichtemittierende Leuchtelemente ausgebildet sind. Dadurch ist eine sichere und sichtbare Erzeugung des benötigten optischen Synchronisationssignals unabhängig von den Beleuchtungsbedingungen der aufzunehmenden Szene gewährleistet.

Die Signalvorrichtung des Synchronisationsgerätes ist in einem Gehäuse angeordnet, wobei die optischen Signalelemente an mindestens einer Oberfläche des Gehäuses sichtbar sind. Dieses Gehäuse lässt sich klein, robust und kompakt und somit geeignet für den Einsatz an den verschiedensten Drehorten ausbilden.

Es ist zweckmäßig, dass das Gehäuse eine Ansteuerelektronik der Signalvorrichtung und eine Steuerschnittstelle zum Anschluss an einen Computer umfasst. Die Energieversorgung des Synchronisationsgerätes erfolgt entweder ebenfalls über die Steuerschnittstelle, oder eine eigene Energieversorgung über Batterien und/oder Akkumulatoren ist im Gehäuse vorgesehen. In einer Ausführungsform ist die Steuerschnittstelle an ein CAN-Bus-System anschließbar.

Es ist besonders vorteilhaft, dass die optischen Signalelemente des Synchronisationsgeräts lichtemittierende Dioden (LED) umfassen. LEDs eignen sich im Vergleich zu üblichen Leuchtmitteln mit Glühwendeln insbesondere aufgrund ihres hohen Wirkungsgrades (geringer Energieverbrauch), ihrer Unempfindlichkeit gegenüber Erschütterungen und ihrer langen Lebensdauer. Außerdem erreichen sie die gewünschte Leuchtintensität innerhalb weniger Mikrosekunden und erlöschen nach dem Abschalten ebenso rasch, was insbesondere bei Hochgeschwindigkeitsaufnahmen von Bedeutung ist.

Die lichtemittierenden Dioden sind zur ansteuerbaren additiven Farbmischung des vom optischen Signalelement erzeugten Lichtes geeignet. Damit ergibt sich die Möglichkeit, mittels der einstellbaren Lichtfarbe der LEDs zusätzliche optische Synchronisationssignale zu generieren. Außerdem lässt sich bei derartigen LEDs die Intensität des emittierten Lichtes genau auf die Empfindlichkeit des eingesetzten Filmmaterials abstimmen.

In einer Ausführungsform weist das Synchronisationsgerät eine Schnittstelle zum Anschluss einer Leuchteinrichtung zur Projektion eines optischen Synchronisationssignals auf. Falls der von der Laufbildkamera aufzunehmende Ausschnitte so klein sein sollte, dass das Synchronisationsgerät nicht ausreichend in den Bildausschnitt einbringbar ist, lässt sich eine zusätzliche Leuchteinrichtung über eine entsprechende Schnittstelle an das Synchronisationsgerät anschließen. Diese externe Leuchteinrichtung ist derart ausgebildet, dass sich mit ihr ein optisches Synchronisationssignal in den kleinen Bildausschnitt projizieren lässt. Aufgrund ihrer hohen optischen Leistung bei kleinen geometrischen Abmessungen eignen sich insbesondere Laserdioden als Lichtquelle einer zusätzlichen anschließbaren Leuchteinrichtung.

Um mit der Laserdiode eine Vielzahl optischer Synchronisationssignale erzeugen zu können, ist die Leuchteinrichtung mit einer zusätzlichen Projektionsoptik auszustatten. Eine solche Projektionsoptik sollte eine Manipulation des Laserdiodenstrahles in verschiedene geometrische Muster ermöglichen.

Dazu eignen sich insbesondere sogenannten holographische optische Elemente (HOE) oder diffraktive optische Elemente (DOE). Mit diesen sehr kleinen und kompakten Optiken ist es möglich, beliebige geometrische Muster zu erzeugen, die über einen Strahlbereich vieler Meter eine im wesentlichen gleiche Größe und Schärfe aufweisen. Weitere Vorteile der Erfindung werden anhand der in den nachfolgenden Figuren beschriebenen beispielhaften Ausführungsformen erläutert.

Es zeigen:

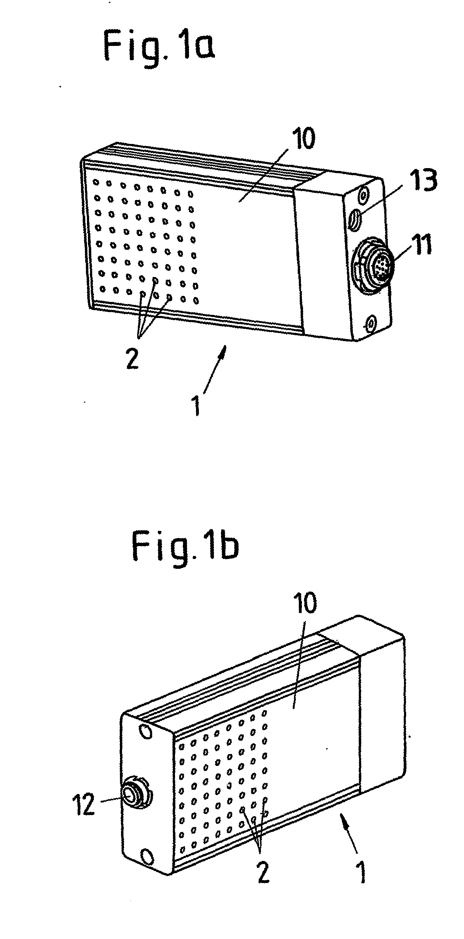

- Figur 1a: eine perspektivische Ansicht einer ersten Ausführungsform des Synchronisationsgerätes;
- Figur 1 b: eine weitere perspektivische Ansicht der ersten Ausführungsform des Synchronisationsgerätes aus Figur 1 und
- Figur 2: eine perspektivische Ansicht einer zweiten Ausführungsform des Synchronisationsgerätes.

Figur 1a zeigt eine erste Ausführungsform des Synchronisationsgerätes 1 mit einem quaderförmigen Gehäuse 10 in einer seitlichen Perspektivansicht. An einer Seitenfläche des Gehäuses befindet sich die Steuerschnittstelle 11 zum Anschluss des Synchronisationsgerätes 1 an den Computer einer rechnergesteuerten Aufnahmevorrichtung (motion control) einer Laufbildkamera. Diese Steuerschnittstelle 11 lässt sich derart ausbilden, dass sie an ein für motion-control-Systeme typisches CAN-Bus-System anschließbar ist.

An der selben Seitenfläche des Gehäuses ist weiterhin ein Innengewinde 13 angeordnet, das die Befestigung des Synchronisationsgerätes 1 an ein zugeordnetes Trägerelement des Kamerasystems erlaubt.

Auf der Oberfläche einer anderen Seitenfläche sind als optischen Signalelemente 64 Leuchtelemente 2 in einer 8x8-Matrix äquidistant zueinander angeordnet. Jedes der 64 Leuchtelemente 2 umfasst mindestens eine lichtemittierende Diode (LED). Mittels der im Innern des Gehäuses 10 angeordneten Signalvorrichtung (nicht dargestellt), die eine Ansteuerelektronik (nicht dargestellt) für die Leuchtelemente 2 umfasst, lassen sich die 64 Leuchtelemente 2 ansteuern. Die Leuchtelemente 2 weisen bevorzugt mindestens drei für die additive Farbmischung ausgebildeten LEDs auf. Auf diese Weise lassen sich für das emittierte Licht jedes Leuchtelementes 2 Farbton und Intensität individuell ansteuern.

Die Signale für die Ansteuerung der Leuchtelemente 2 erhält das Synchronisationsgerät 1 über die Steuerschnittstelle 11 vom Computer des motion-control-Systems. Somit lassen sich mittels der durch die Leuchtelemente 2 gebildeten 8x8-Matrix eine Vielzahl von Buchstaben und/oder Zahlen, Symbolen, Mustern und deren Kombinationen als optische Synchronisationssignale darstellen. Außerdem sind diese optischen Synchronisationssignale in Farbe und Intensität auf die jeweiligen Bedingungen, d.h. Beleuchtungssituation der aufzunehmenden Szene, Empfindlichkeit des Filmmaterials einstellbar.

Beim Einsatz des Synchronisationsgerätes 1 am Aufnahmeort veranlasst der Computer des motion-control-Systems, dass das Synchronisationsgerät 1 zu Beginn des ersten aufzunehmenden Durchlaufes in der Szene zu sehen ist und löst das gewünschte optische Synchronisationssignal zu einem definierten Zeitpunkt der rechnergestützten Kamerafahrt aus. Danach wird das Syhchronisationsgerät 1 aus der Szene entfernt und der Durchlauf bis zum Ende aufgenommen. Nach Beginn des zweiten Durchlaufes wird das Synchronisationsgerät 1 wiederum in der Szene positioniert und exakt zum gleichen Zeitpunkt nach Start des zweiten Durchlaufes löst der Computer des motion-control-Systems wiederum das optische Synchronisationssignal aus. Das Synchronisationssignal wird aus der Szene entfernt und der zweite Durchlauf abgedreht. Nach dem gleichen Schema wiederholt sich die Prozedur für jeden weiteren zusätzlichen Durchlauf. Es ist ebenso möglich, das optische Synchronisationssignal am Ende jedes Durchlaufes mittels des Synchronisationsgerätes 1 aufzunehmen.

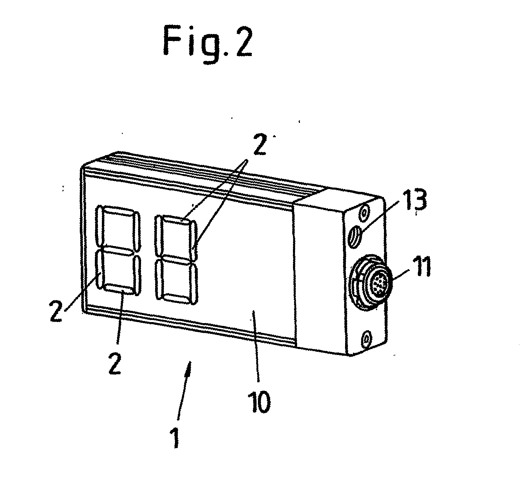

Anstelle der Steuerschnittstelle 11 wäre es ebenso denkbar, das Synchronisationsgerät 1 mit einer kabellosen Funk- bzw. Infrarotschnittstelle auszubilden. Dazu wäre jedoch eine separate im Gehäuse 10 untergebrachte Energieversorgung mittels Batterien oder Akkumulatoren notwendig. Bei den in den Figuren 1a, 1b und 2 gezeigten Ausführungsformen des Synchronisationsgerätes 1 ist die Energieversorgung über dafür gesondert vorgesehene Pole der Steuerschnittstelle 11 vorgesehen.

In Figur 1b ist die erste Ausführungsform des Synchronisationsgerätes 1 aus einer im Verhältnis zu Figur 1a um 90° gedrehten perspektivischen Ansicht dargestellt. Auf der der Steuerschnittstelle 11 gegenüberliegenden Seitenfläche des Gehäuses 10 weist das Synchronisationsgerät 1 eine Schnittstelle 12 zum Anschluss einer externen Leuchteinrichtung zur Projektion eines optischen Synchronisationssignals in eine aufzunehmende Szene auf.

Für den Fall, dass die Randbedingungen der aufzunehmenden Szene es nicht erlauben, das Synchronisationsgerät 1 zum Generieren des optischen Synchronisationssignals in der Szene anzuordnen, lässt sich über die Schnittstelle 12 eine zusätzliche externe Leuchteinrichtung an das Synchronisationsgerät 1 anschließen. Mittels dieser externen Leuchteinrichtung lässt sich ein optisches Synchronisationssignal bei einer geeigneten Ausrichtung der Leuchteinrichtung in die aufzunehmende Szene hineinprojizieren. Die Auslösung dieses projizierten optischen Synchronisationssignals wird wiederum vom Computer des motion-control-Systems über die Steuerschnittstelle 11 und die Schnittstelle 12 vorgenommen.

Figur 2 zeigt eine zweite Ausführungsform eines erfindungsgemäßen Synchronisationsgerätes 1 aus der gleichen Perspektive wie Figur 1a. Gleiche Bauelemente sind dabei mit gleichen Bezugszeichen versehen.

Im Unterschied zu der in den Figuren 1a und 1b gezeigten Ausführungsform weist das Synchronisationsgerät 1 in Figur 2 Leuchtelemente 2 auf, die in Form einer zweistelligen Digitalanzeige angeordnet sind. Mittels der gebildeten Digitalanzeige lassen sich sämtliche Ziffern und/oder einige Buchstaben und deren Kombinationen als optische Synchronisationssignale erzeugen.

Mit Hilfe geeigneter Leuchtelemente 2 und einer entsprechenden Ansteuerelektronik (nicht dargestellt) lassen sich auch bei dieser Ausführungsform Intensität und Farbton des von den Leuchtelementen 2 emittierten Lichtes einstellen.

Es ist klar, dass das erfindungsgemäße Synchronisationsgerät neben den vorangehend beschriebenen mit einer großen Zahl weiterer in Frage kommender optischer Signalelemente realisierbar ist. Die Art der Erzeugung des optischen Signals mittels der optischen Signalelemente ist auf vielerlei Arten vorstellbar (Plasmalichtquelle, Flüssigkristallanzeige, Lumineszenzlichtquellen oder rein mechanische Anzeigeelemente). Erfindungswesentlich ist lediglich, dass durch die Kombination mindestens zweier optischer Signalelemente eine Mehrzahl optischer Synchronisationssignale generierbar ist.

## Patentansprüche

1. Synchronisationsgerät (1) zum Bereitstellen optischer Synchronisationssignale in computergesteuerten Bildaufnahmen einer Laufbildkamera mit einer Signalvorrichtung zur Erzeugung der optischen Synchronisationssignale, die mittels des die Bildaufnahmen steuernden Computers auslösbar sind, der über eine Steuerschnittstelle (11) an das Synchronisationsgerät (1) anschließbar ist, und mit einer Ansteuerelektronik zur Ansteuerung mehrerer in Form einer Matrix angeordneter und zur ansteuerbaren, additiven Farbmischung des von ihnen abgegebenen Lichtes geeigneter lichtemittlerender Dioden (2).

2. Synchronisationsgerät nach Anspruch 1, **dadurch gekennzeichnet, dass** die lichtemittierenden Dioden (2) an mindestens einer Oberfläche eines Gehäuses (10) des Synchronisationsgerätes (1) angeordnet sind.

3. Synchronisationsgerät nach Anspruch 1 oder 2, **dadurch gekennzeichnet, dass** die Steuerschnittstelle (11) an ein CAN-Bus-System anschließbar ist.

4. Synchronisationsgerät nach einem der voranstehenden Ansprüche, **gekennzeichnet durch** eine am Gehäuse (10) des Synchronisationsgerätes (1) angeordnete Schnittstelle (12) zum Anschluss einer Leuchteinrichtung (3) zur Projektion eines optischen Synchronisationssignales.

## Claims

1. Synchronisation device (1) for preparing optical synchronisation signals in computer-controlled picture recordings of a motion picture camera with a signalling device for generating the optical synchronisation signals which can be initiated by means of the computer which controls the picture recordings and which is connectable by way of an interface (11) to the synchronisation device (1), and with a control electronics for controlling several light-emitting diodes (2) which are arranged in the form of a matrix and are suitable for the controllable additive colour mixing of the light emitted from them.

2. Synchronisation device according to claim 1 **characterised in that** the light-emitting diodes (2) are arranged on at least one surface area of a housing (10) of the synchronisation device (1).

3. Synchronisation device according to claim 1 or 2 **characterised in that** the interface (11) can be connected to a CAN bus system.

4. Synchronisation device according to one of the preceding claims **characterised by** an interface (12) disposed on the housing (10) of the synchronisation device (1) for connection of a light device (3) for the projection of an optical synchronisation signal.

## Revendications

1. Appareil de synchronisation (1) servant à fournir des signaux de synchronisation optiques dans des prises de vue commandées par ordinateur d'une caméra, comportant un dispositif de signal servant à générer des signaux de synchronisation optiques, lesquels peuvent être déclenchés au moyen de l'ordinateur commandant les prises de vue, lequel ordinateur peut être raccordé à l'appareil de synchronisation (1) via une interface de commande (11), et comportant un dispositif électronique de contrôle servant à contrôler plusieurs diodes (2) électroluminescentes disposées en forme de matrice et adaptées pour le mélange additif de couleurs provenant de la lumière émise qu'elles émettent.

2. Appareil de synchronisation selon la revendication 1, **caractérisé en ce que** les diodes (2) électroluminescentes sont disposées au niveau au moins d'une surface d'un boîtier (10) de l'appareil de synchronisation (1).

3. Appareil de synchronisation selon la revendication 1 ou 2, **caractérisé en ce que** l'interface de commande (11) peut être raccordée à un système bus CAN.

4. Appareil de synchronisation selon l'une quelconque des revendications précédentes, **caractérisé par** une interface (12) disposée sur le boîtier (10) de l'appareil de synchronisation (1) pour le raccordement d'un dispositif d'éclairage (3) pour la projection d'un signal de synchronisation optique.
